# EUROPEAN PATENT APPLICATION

(11) **EP 4 847 565 A1**
(43) Date of publication of application: **02.12.2026**
(21) Application number: 25179486.3
(22) Date of filing: 28.05.2025
(51) Int. Cl.: C08L 97/02

(54) **FIBER COMPOSITION**

(71) Applicant: Duynie Holding B.V., 2407 AJ Alphen aan den Rijn (NL)
(72) Inventor: DEES, Raoul, 2407 AJ c/o Alphen aan den Rijn (NL); LAZEROMS, Robert, 2407 AJ C/O Alphen aan den Rijn (NL)
(74) Representative: Arnold & Siedsma

(57) **Abstract**

The invention pertains to a fiber composition comprising a plant-based fiber particles having a d95 of at most 60 mm, wherein at least 20 % of the particles have a particle size of at most 15 mm.

## Description

The present invention relates to fiber composition.

Fiber compositions comprising plant-based fiber particles are known. Various articles have described the use of such fiber particles in polymeric matrices such as rigid polyurethane foams. Divya et al (Indian Journal of Advances in Chemical Science S1 (2016) 267-274) provides an overview of natural fiber reinforced thermoset polymer composites and the effect of the natural fiber on the mechanical properties of the composites. The nature of the fiber determines the interaction with the polymer matrix.

An example is described in Akdogan et al (2020: https://doi.org/10.1007/s10965-021-02445-w) in which sugar beet pulp was dried at 70°C and the fibers were ground and sieved. The sugar beet-derived fiber particles were used in rigid polyurethane foam.

According to Divya et al, to obtain the better properties treating the fiber with chemical agents are necessary.

Erdem et al (2021: https://doi.org/10.1007/s13399-021-01579-7) modifies sugar beet fiber particles using sulfuric acid at a temperature above 120 °C and a second treatment with a 1,4-dioxolane/water mixture. In this way, an ecopolyol is obtained which is used in rigid polyurethane foam.

In Strakowska et al (2020: https://doi:10.3390/ma13235493) sugar beet fiber particles are treated with a sodium hydroxide solution, washed and neutralized using an acetic acid solution. The chemical and physical structure of the obtained fiber particles will significantly change compared to the initial sugar beet pulp. A similar process is described for eucalyptus fiber in Czlonka et al (2020: https://doi:10.3390/ma13071781). The treated eucalyptus fiber can subsequently be treated with silane or maleic anhydride to modify the surface properties of the fibers.

Such treatment of plant-based fibers is generally elaborate, relatively expensive and not easy to scale up. There is a need for plant-based fiber particles with improved properties in polymeric matrices.

The objective of the present invention is to provide a novel fiber composition.

The invention pertains to a fiber composition comprises a plant-based fiber particles having a d95 of at most 60 mm, wherein at least 20 % of the particles have a particle size of at most 15 mm. Plant-based fiber particles of the invention can be advantageously used in coating compositions and in polymer matrices. When such fiber particles are too large, e.g. particles having a d95 of at least 200 mm, the compatibility with polymer or resin matrices is considerably less leading for example to fracture of the polymer or resin matrices when stress is applied. The size of the inventive fiber particles allow for an improved compatibility with polymer and/or resin matrices. Without being bound by theory, it is believed that the plant-based fiber particles are capable of forming covalent bonds with monomers, oligomers and polymers comprising reactive groups capable of reacting with the hydroxyl groups present in plant-based fiber particles. The inventive particles may alter the chemical and physical properties of polymer and/or resin matrices and/or (cured) coating compositions. The presence of the inventive fiber particles may improve the tensile strength and/or compressive strength of polymeric matrices. Alternatively or additionally, the elasticity of the polymers may improve. The fiber particles of the invention may further enhance fire retardancy, prevent further flame propagation and/or suppress smoke development. In addition, the plant-based fiber particles generally contribute to charring and/or creating an oxygen barrier. The inventive fibers may further replace at least partially conventional fillers such as titania, talc and calcium carbonate. Moreover, the thermal conductivity of polymer matrices and/or coatings may be improved when the fiber composition of the invention is present. The water vapor permeability and water vapor resistivity factor are enhanced in polymer matrices, in particular in rigid polyurethane foams. As the density of the plant-based fiber is significantly lower compared to conventional fillers, the overall weight of the coating and/or polymer matrices will be lower. The inventive fiber particles may further replace part of the monomers, oligomers and/or polymers, which renders the overall coating and/or polymer matrices economically more interesting. Moreover, the carbon footprint of the coating and/or polymer matrices will improve as the inventive fiber particles are biobased. In addition, the inventive fiber particles are generally well dispersed in a solvent, preferably a polyol. The particle size of the fiber particles causes less particles to sediment, in particular at concentration above 5 wt%, based on the total weight of the dispersion. Furthermore, the plant-based fiber particles in the fiber composition generally do not stick together. Consequently, the storage stability of such dispersions is considerably improved. Moreover, the rheological properties of such dispersions are positively influenced by the inventive particles. It is believed that this is due to the improved surface area and potential to form hydrogen bonds between the particles.

The plant-based fiber particles can originate from any plant-based fiber source known in the art. Plant-based fibers generally comprise cellulose. In one embodiment, the plant-based fibers originate from cellulose-containing fractions obtained after extraction or isolation of sugars such as fructose and sucrose, polysaccharides such as inulin and starch. Examples of such plant-based fibers include fibers originating from sugar beet, sugar cane, chicory, citrus, brewer's spent grain, corn and soy. Preferably, the plant-based fiber originates from sugar beet, preferably from sugar beet pulp. Alternatively, the plant-based fiber originates from chicory, preferably chicory root pulp. In another embodiment, the plant-based fiber originates from brewer's spent grain (BSG), preferably, the BSG fraction from which protein has been removed, for example the coarse fiber fraction and/or fine fiber fraction as described in WO 23/100146.

**In** one embodiment of the invention, the inventive fiber particles comprise cellulose and hemicellulose. In one embodiment, the plant-based fiber particles of the invention comprise at least 15 wt% cellulose, more preferably at least 18 wt% cellulose and most preferably at least 20 wt% cellulose, and preferably at most 35 wt% cellulose, more preferably at most 32 wt% cellulose and most preferably at most 30 wt% cellulose, based on the total dry weight of the plant-based fiber particles.

In one embodiment, the plant-based fiber particles comprise at least 5% wt% hemicellulose, more preferably at least 10 wt% hemicellulose and most preferably at least 20 wt% hemicellulose, and preferably at most 55 wt% hemicellulose, more preferably at most 50 wt% hemicellulose and most preferably at most 45 wt% hemicellulose, based on the total dry weight of the plant-based fiber particles.

In one embodiment of the invention, the weight ratio of hemicellulose and cellulose in the fiber particles is at least 0.1, more preferably at least 0.5 and most preferably at least 1.0, and preferably at most 3.0, more preferably at most 2.5 and most preferably at most 2.0.

In one embodiment, the plant-based fiber particles comprise at least 0.1% wt% lignin, more preferably at least 0.5 wt% lignin and most preferably at least 1 wt% lignin, and preferably at most 10 wt% lignin, more preferably at most 8 wt% lignin e and most preferably at most 5 wt% lignin, based on the total dry weight of the plant-based fiber particles.

The amount of cellulose, hemicellulose and lignin can be determined using conventional techniques including determining NDF, ADF and ADL. The term "NDF" is known as "Neutral Detergent Fiber", which includes cellulose, hemicellulose and lignin. The term "ADF" refers to "Acid Detergent Fiber" and includes cellulose and lignin. For the determination of the amount of lignin the term "ADL" is used which refers to "Acid Detergent Lignin". The ADF and ADL values were determined according to the standard method NEN-ISO 13906:2008, and the NDF value was determined according to the standard method NEN-ISO 16472:2006.

In one embodiment, the plant-based fiber particles comprise at least 0.1% wt% pectin, more preferably at least 0.5 wt% pectin and most preferably at least 1 wt% pectin, and preferably at most 20 wt% pectin, more preferably at most 18 wt% pectin and most preferably at most 15 wt% pectin, based on the total dry weight of the plant-based fiber particles. It is also envisaged that pectin is absent in the plant-based fiber particles of the invention.

In one embodiment, the inventive fiber particles have a d95 value of at most 58 □m, preferably at most 55 □m, more preferably at most 52 □m, and most preferably at most 50 □m, and generally at least 1 □m, preferably at least 10 □m, more preferably at least 15 □m and most preferably at least 20 □m. The d95 value is a measure for the particle size distribution of fiber particles, which can be determined using conventional techniques such as laser diffraction.

In one embodiment, at least 25% of the fiber particles have a particle size of at most 20 mm, preferably at least 30% of the particles have a particle size of at most 20 mm, more preferably at least 35% of the particles have a particle size of at most 20 mm and most preferably at least 40% of the particles have a particle size of at most 20 mm, and preferably at most 99% of the particles have a particle size of at most 20 mm, more preferably at most 95% of the particles have a particle size of at most 20 mm, even more preferably at most 90% of the particles have a particle size of at most 20 mm and most preferably at most 80% of the fiber particles have a particle size of at most 20 mm.

Alternatively or additionally, the inventive fiber particles have a d10 value of at most 18 □m, preferably at most 15 □m, more preferably at most 12 □m, and most preferably at most 10 □m, and generally at least 0.1 □m, preferably at least 0.5 □m, more preferably at least 1 □m and most preferably at least 2 □m. The d10 value is a measure for the particle size distribution of fiber particles, which can be determined using conventional techniques such as laser diffraction. Alternatively or additionally, the inventive fiber particles have a d50 value of at most 40 □m, preferably at most 35 □m, more preferably at most 30 □m, and most preferably at most 25 □m, and generally at least 1 □m, preferably at least 5 □m, more preferably at least 10 □m and most preferably at least 15 □m. The d50 value is a measure for the particle size distribution of fiber particles, which can be determined using conventional techniques such as laser diffraction.

In one embodiment, the inventive fiber composition comprises at most 10 wt% water, based on the total weight of the fiber composition. Preferably, the inventive fiber composition comprises at most 8 wt% water, more preferably at most 5 wt% water, even more preferably at most 4 wt% water and most preferably at most 3 wt% water, and preferably at least 0.1 wt% water, more preferably at least 0.2 wt% water, even more preferably at least 0.5 wt% water and most preferably at least 1 wt% water, based on the total weight of the fiber composition. A low water content is advantageous in applications where water may interfere with the curing process and/or may cause foam formation.

In one embodiment, the fiber composition comprises an additive. The additive can be any additive known in the art. Such additives include other (modified) starch, (modified) cellulose, binders, (dietary) fibers, pigments, (inorganic) fillers, raising agents, flavouring agents, anti-oxidants, preservatives, sugars and colouring agents.

In one embodiment of the invention, the fiber composition comprises at least 1 wt% of the additive. Preferably, the inventive composition comprises at least 2 wt% additive, more preferably at least 5 wt% additive, even more preferably at least 10 wt% additive and most preferably at least 15 wt% additive, and preferably at most 60 wt% additive, more preferably at most 50 wt% additive and most preferably at most 40 wt% additive, based on the total dry weight of the fiber composition.

The amounts of plant-based fiber particles, water, additives and any other components add up to 100% by weight of the fiber composition.

### Process for preparing fiber composition

The fiber composition of the invention can be prepared using any suitable method known in the art. The invention pertains to a process for preparing a fiber composition comprising plant-based fiber particles having a d95 of at most 60 mm, wherein at least 20 % of the particles have a particle size of at most 15 mm comprising the steps of:
(a) comminuting fiber particles in a slurry of plant-based pulp to obtain plant-based fiber particles;
(b) separating fiber particles having a particle size of at most 60 mm from fiber particles having a particle of at least 60 mm to obtain plant-based fiber particles having a d95 of at most 60 mm, wherein at least 20 % of the particles have a particle size of at most 15 mm; and
(c) drying the plant-based fiber particles to obtain the fiber composition.

In step (a) of the process of the invention, the fiber particles are present in a slurry of plant-based pulp and are comminuted to obtain plant-based fiber particles. The comminution can be performed using any suitable method known in the art. Examples of such comminution method include milling using a ball mill, roll mill, pin mill, hammer mill, colloid mill and meat emulsifier. The term "meat emulsifier" is well known in the art and generally represents meat cutting machines that are capable of cutting meat at high speed and at high shear.

In a preferred embodiment, the slurry comprises the plant-based fiber particles in an amount of between 1 and 30 wt% (percent by weight), based on the total weight of the slurry of plant-based fiber particles. Preferably, the amount is at least 2 wt% of plant-based fiber particles, more preferably at least 5 wt% of plant-based fiber particles and most preferably at least 10 wt% of plant-based fiber particles, and preferably at most 28 wt% of plant-based fiber particles, more preferably at most 25 wt% of plant-based fiber particles and most preferably at most 22 wt% of plant-based fiber particles, based on the total weight of the slurry of plant-based fiber particles.

In one embodiment, the temperature of the suspension in step (a) is maintained at a temperature above room temperature. Preferably, the temperature of the suspension is at least 25°C, more preferably at least 30°C, more preferably at least 35°C and most preferably at least 40°C, and preferably at most 80°C, more preferably at most 75°C, and most preferably at most 70°C.

In step (b) of the process of the invention, the fiber particles are separated having a particle size of at most 60 mm from fiber particles having a particle of at least 60 mm to obtain plant-based fiber particles having a d95 of at most 60 mm, wherein at least 20 % of the particles have a particle size of at most 20 mm. The separation can be performed using any suitable method known in the art. Examples of such separation methods include methods using rotary sieves, sieves, filters and vacuum filters.

In one embodiment, the temperature in step (b) is maintained at a temperature above room temperature. Preferably, the temperature is at least 25°C, more preferably at least 30°C, more preferably at least 35°C and most preferably at least 40°C, and preferably at most 80°C, more preferably at most 75°C, and most preferably at most 70°C. The temperature in step (b) can be the same or different from the temperature in step (a).

In step (c) of the process, the plant-based fiber particles are dried to obtain the fiber composition. The drying method can be any suitable drying method known in the art. Suitable drying methods include oven drying, flash drying, spray drying and fluidized bed drying.

In one embodiment, the temperature in step (c) is above room temperature. Preferably, the temperature is at least 25°C, more preferably at least 30°C, more preferably at least 35°C and most preferably at least 40°C, and preferably at most 120°C, more preferably at most 100°C, even more preferably at most 80°C and most preferably at most 60°C. When the fiber particles are prone to change color when heated, the temperature in step (c) is preferably kept below 70°C and more preferably below 60°C.

In an alternative process, step (b) is performed to remove water from the suspension and maintain all the fiber particles in the paste or filter cake. Following drying step (c), a further separation step (d) can be performed whereby the plant-based fiber particles having a d95 of at most 60 mm are separated from the fiber particles having a particle size exceeding 60 mm to obtain plant-based fiber particles having a d95 of at most 60 mm, wherein at least 20 % of the particles have a particle size of at most 15 mm.

The fiber separation step (d) can be performed using any suitable method known in the art, Examples of such methods include air clarification, sieves, cyclone separator, elutriation and a bag filter.

In one embodiment, the temperature in separation step (d) is maintained at a temperature above room temperature. Preferably, the temperature is at least 25°C, more preferably at least 30°C, more preferably at least 35°C and most preferably at least 40°C, and preferably at most 80°C, more preferably at most 75°C, and most preferably at most 70°C.

The invention further pertains to a process for preparing a fiber composition comprising plant-based fiber particles having a d95 of at most 60 mm, wherein at least 20 % of the particles have a particle size of at most 15 mm comprising the steps of:
(a) drying the plant-based fiber particles to obtain dried fiber particles;
(b) comminuting the dried fiber particles to obtain comminuted fiber particles; and
(c) separating fiber particles having a d95 of at most 60 mm from fiber particles having a particle of at least 60 mm to obtain plant-based fiber particles having a d95 of at most 60 mm, wherein at least 20 % of the particles have a particle size of at most 15 mm to obtain the fiber composition.

In step (a) of the process, the plant-based fiber particles are dried to obtain the fiber composition. The drying method can be any suitable drying method known in the art. Suitable drying methods include oven drying, flash drying, spray drying and fluidized bed drying.

In one embodiment, the temperature in step (a) is above room temperature. Preferably, the temperature is at least 25°C, more preferably at least 30°C, more preferably at least 35°C and most preferably at least 40°C, and preferably at most 120°C, more preferably at most 100°C, even more preferably at most 80°C and most preferably at most 60°C. When the fiber particles are prone to change color when heated, the temperature in step (a) is preferably kept below 70°C and more preferably below 60°C.

In step (b) of the process of the invention, the dried fiber particles are comminuted to obtain plant-based fiber particles. The comminution can be performed using any suitable method known in the art. Examples of such comminution method include milling using a ball mill, roll mill, pin mill, hammer mill and colloid mill.

In one embodiment, the temperature of the suspension in step (b) is maintained at a temperature above room temperature. Preferably, the temperature of the suspension is at least 25°C, more preferably at least 30°C, more preferably at least 35°C and most preferably at least 40°C, and preferably at most 80°C, more preferably at most 75°C, and most preferably at most 70°C.

In step (c) of the process of the invention, the fiber particles are separated having a particle size of at most 60 mm from fiber particles having a particle of at least 60 mm to obtain plant-based fiber particles having a d95 of at most 60 mm, wherein at least 20 % of the particles have a particle size of at most 15 mm. The fiber separation step (c) can be performed using any suitable method known in the art, Examples of such methods include air clarification, sieves, cyclone separator, elutriation and a bag filter.

In one embodiment, the temperature in separation step (c) is maintained at a temperature above room temperature. Preferably, the temperature is at least 25°C, more preferably at least 30°C, more preferably at least 35°C and most preferably at least 40°C, and preferably at most 80°C, more preferably at most 75°C, and most preferably at most 70°C.

### Dispersion

The invention further pertains to a dispersion comprising a solvent and a fiber composition comprising plant-based fiber particles having a d95 of at most 60 mm, wherein at least 20 % of the particles have a particle size of at most 15 mm. The invention further pertains to a dispersion comprising a polyol and a fiber composition comprising plant-based fiber particles having a d95 of at most 60 mm, wherein at least 20 % of the particles have a particle size of at most 20 mm. The dispersion of the invention have a considerably higher viscosity compared to dispersions with fiber particles of sizes exceeding 60 mm. **It** is believed that this is due to the improved interaction between hydroxyl groups present on the fiber particles. The inventive dispersions are generally shear thinning and/or thixotropic. The stability of the inventive dispersion is moreover enhanced. The sedimentation of the fiber particles is significantly reduced or even absent. Consequently, the dispersions are more stable and may contain higher amounts of the fiber particles (without sedimentation of the fiber particles) compared to the dispersions disclosed in EP 4 067 402.

The plant-based fiber particles used in the dispersion of the invention are the same as described above. In one embodiment, the dispersion may comprise the plant-based fiber particles in an amount of at most 60 % by weight (wt%), based on the total weight of the dispersion. Preferably, the plant-based fiber particles are present in an amount of at most 50 wt%, more preferably at most 40 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the dispersion.

The dispersion further comprises a solvent. The solvent can be any solvent known in the art and suitable for use in dispersions. Examples of solvents include water; alcohols such as ethanol, isopropanol and polyol; alkanes such as pentane and hexane; ketones such as methyl ethyl ketone (MEK), acetone and methyl propyl ketone; and aromatic solvents such as toluene and benzene. In a preferred embodiment, the dispersion comprises water as solvent.

In a preferred embodiment, the solvent is a polyol. The polyol can be any polyol known in the art. The term polyol compounds as used herein refers to organic compound wherein the individual molecules contain two or more hydroxyl groups. Preferably, the polyol is a polyol that can be used in polymerization and/or cross-linking reactions. Examples of such polyols include pentaerythritol, trimethylolpropane, glycols, (hydroxy alkylated) sugar alcohols, glycerine, (modified) polyether polyols (for example such as sold under the trade name Voranol^{™} by Dow Chemical Company, US), (modified) aliphatic and aromatic polyester polyols (for example such as sold under the trade name Stepanpol^{®} by Stepan Company, US), polycarbonate polyols and polyols derived from plant-based natural oils. A preferred polyol is glycol. Examples of glycols include ethylene glycol, diethylene glycol, triethylene glycol, tetraethylene glycol, polyethylene glycol, propylene glycol, dipropylene glycol, tripropylene glycol, polypropylene glycol, neopentyl glycol, 1,3-propanediol, 1,3-butanediol, 1,4-butanediol, 1,6-hexanediol and 4-cyclohexanedimethanol.

A further preferred polyol includes diethylene glycol-phthalic anhydride-based polyester polyol (Stepanpol^{®} PS-3152, average hydroxy functionality of 2.0), sucrose/glycerine initiated polyether polyol (Voranol^{™} RH360, average hydroxy functionality of 4.5) and polypropylene glycol (Voranol^{™} 1010 L, average hydroxy functionality of 2).

In one embodiment, the dispersion may comprise a solvent, preferably a polyol, in an amount of at most 90 % by weight (wt%), based on the total weight of the dispersion. Preferably, the solvent, preferably the polyol, is present in an amount of at most 80 wt%, more preferably at most 70 wt%, even more preferably at most 60 wt% and most preferably at most 50 wt%, and preferably at least 1 wt%, more preferably at least 2 wt%, even more preferably at least 5 wt% and most preferably at least 10 wt%, based on the total weight of the dispersion.

In one embodiment, the inventive dispersion comprises an additive. The additive can be any additive known in the art. Examples of such additives include dyes, pigments, dispersants, surfactants, catalysts, porogenic agents, fillers, water-binding agents, water, anti-foaming agents, flame retardants, UV stabilizers, antioxidants, adhesion promoters, plasticizers, thickeners and rheology modifiers.

In one embodiment, the dispersion may comprise an additive in an amount of at most 50 % by weight (wt%), based on the total weight of the dispersion. Preferably, the additive is present in an amount of at most 40 wt%, more preferably at most 30 wt%, even more preferably at most 25 wt% and most preferably at most 20 wt%, and preferably at least 0.1 wt%, more preferably at least 0.5 wt%, even more preferably at least 1 wt% and most preferably at least 5 wt%, based on the total weight of the dispersion.

With the plant-based fiber particles, the solvent or polyol and the additive, the other components add up to 100 wt% of the total weight of the dispersion.

### Coating composition

The invention further pertains to a coating composition comprising a resin and a fiber composition comprising plant-based fiber particles having a d95 of at most 60 mm, wherein at least 20 % of the particles have a particle size of at most 15 mm. The invention further pertains to a resin and a dispersion comprising a solvent and a fiber composition comprising plant-based fiber particles having a d95 of at most 60 mm, wherein at least 20 % of the particles have a particle size of at most 20 mm.

The resin can be any resin known in the art and used in coating compositions. The first resin of the invention may be a monomer, an oligomer or polymer. The first resin may be an alkyd resin, an acrylic resin, a polyester resin, a polyether resin, a polyester polyol resin, a silicone-based resin, a phenolic resin, a urethane-based or isocyanate-based resin, an aminoplast and an epoxy resin. Also, compositions comprising a second resin are contemplated. It is noted that conventional coating composition may only contain up to 30 wt% of a first resin, e.g. a polyester; the total amount of resin is determined by the viscosity of the coating composition, which becomes so high that normal application of the coating composition is not possible anymore. The eutectic composition of the invention enables a higher amount while maintaining a low viscosity. For example, the inventors have found that conventional coating compositions with a polyester content of 30 wt% can contain up to 60 wt% when the eutectic composition is added to the coating composition.

Examples of alkyd resins include drying and non-drying alkyd resins. Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Examples of phenolic resins include phenol-formaldehyde-based resins such as novolacs and resols. Examples of isocyanate-based resins include toluene diisocyanate (TDI), methylene diphenyl diisocyanate (MDI), 1,6-hexamethylene diisocyanate (HMDI), isophorone diisocyanate (IPDI) and 4,4'-diisocyanato dicyclohexylmethane (H₁₂MDI). Examples of epoxy resins include bisphenol A epoxy resins, bisphenol F epoxy resins, novolac epoxy resins, aliphatic epoxy resins, cycloaliphatic epoxy resins and glycidyl amine epoxy resins.

In one embodiment of the invention, the coating composition comprises the resin in an amount of at least 10 % by weight (wt%), based on the total weight of the coating composition. Preferably, the resin is present in an amount of at least 15 wt%, more preferably at least 20 wt%, even more preferably at least 30 wt%, even more preferably at least 40 wt%, even more preferably at least 50 wt% and most preferably at least 60 wt%, and preferably at most 95 wt%, more preferably at most 90 wt%, even more preferably at most 85 wt% and most preferably at most 80 wt%, based on the total weight of the coating composition.

The plant-based fiber particles and fiber composition used in the coating composition of the invention are the same as described above. The coating composition of the invention comprises the fiber composition in an amount of at most 90 % by weight (wt%), based on the total weight of the coating composition. Preferably, the fiber composition is present in an amount of at most 85 wt%, more preferably at most 80 wt%, even more preferably at most 70 wt%, even more preferably at most 60 wt%, even more preferably at most 50 wt% and even most preferably at most 40 wt%, and preferably at least 1 wt%, more preferably at least 2 wt%, even more preferably at least 5 wt%, even more preferably at least 10 wt%, even more preferably at least 15 wt% and most preferably at least 20 wt%, based on the total weight of the coating composition.

Alternative or additionally, the coating composition may comprise a dispersion comprising a solvent and the fiber composition of the invention. The details of the inventive dispersion is described above. Preferably, the solvent in the dispersion is reactive with the resin.

The coating composition of the invention comprises the dispersion in an amount of at most 90 % by weight (wt%), based on the total weight of the coating composition. Preferably, the dispersion is present in an amount of at most 85 wt%, more preferably at most 80 wt%, even more preferably at most 70 wt%, even more preferably at most 60 wt%, even more preferably at most 50 wt% and even most preferably at most 40 wt%, and preferably at least 1 wt%, more preferably at least 2 wt%, even more preferably at least 5 wt%, even more preferably at least 10 wt%, even more preferably at least 15 wt% and most preferably at least 20 wt%, based on the total weight of the coating composition.

In another embodiment of the invention, the coating composition comprises solids in an amount of at least 15 % by weight (wt%), based on the total weight of the coating composition. Preferably, the solids are present in an amount of at least 20 wt%, more preferably at least 30 wt%, even more preferably at least 40 wt%, even more preferably at least 50 wt%, and most preferably at least 60 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid and/or non-volatile material (e.g. reactive diluents/solvents) in the coating composition; typically the solids include the resins, pigments, dyes, catalyst, etc. and does not include solvents that evaporate during the curing process. The amount of solids may also be referred to as "solids content".

The remaining part of the coating composition may be comprised of other components commonly used in coating compositions. With the resin, the fiber composition and/or dispersion, the other components add up to 100 wt% of the total weight of the coating composition.

In an embodiment of the invention, the coating composition of the invention can be further diluted by a solvent to obtain a solids content below 40 wt%. For certain applications, such as the application of extremely thin coating layers, this may be warranted. In such case, the solids content in the coating composition of the invention may be preferably at most 35 wt%, more preferably at most 30 wt% and most preferably at most 25 wt%, and preferably at least 1 wt%, more preferably at least 2 wt%, even more preferably at least 5 wt%, and most preferably at least 10 wt%. Alternatively, the coating compositions with the higher solids content (above 50 wt%) may be diluted with a suitable solvent, and optionally additives, just prior to application to a substrate. The dilution level may be used as desired, and the skilled person is well capable of diluting in an appropriate manner.

The coating composition of the invention may further comprise a solvent. The solvent may be any suitable solvent known in the art. Preferred solvents are reactive solvents that comprise a functional group capable of reacting with the first resin. The functional group may be hydroxyl, amine or thiol. Preferably, the functional group is a hydroxyl or an amine. Examples of reactive solvents include alcohols, such as methanol, ethanol, diethanol, amino ethanol, glycol, n-propanol, iso-propanol and ethanethiol, ethylene glycol, propylene glycol and neopentyl glycol; and amines, such as methyl amine, ethanol amine, dimethyl amine, methyl ethanol amine, diphenyl amine, trimethyl amine, triphenyl amine and piperidine; and acrylates such as acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, and 3-hydroxypropyl methacrylate; and water.

Examples of non-reactive solvents include Solvent Naphtha^{®}, heavy benzene, various Solvesso^{®} grades, various Shellsol^{®} grades and Deasol^{®}, various white spirits, mineral turpentine oil, tetralin, decalin, methyl ethyl ketone, acetone and methyl n-propyl ketone. Non-reactive solvents that are incorporated at least partially and preferably completely, into the cured resin are preferred. Preferably, the non-reactive solvent has a boiling point above the curing temperature, preferably above 250 °C. The coating composition of the invention may comprise a reactive solvent and a non-reactive solvent, a combination of two or more solvents, or a combination of two or more reactive solvents. Coating compositions comprising a reactive solvent and/or water are preferred. The coating composition of the invention may comprise the non-reactive solvent and/or the reactive solvent in an amount of at most 30 % by weight (wt%), based on the total weight of the coating composition. Preferably, the non-reactive solvent and/or the reactive solvent is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

In a further embodiment, the coating composition of the invention may comprise water in an amount of at most 85 % by weight (wt%), based on the total weight of the coating composition. Preferably, the water is present in an amount of at most 70 wt%, more preferably at most 60 wt%, even more preferably at most 50 wt%, even more preferably at most 40 wt% and most preferably at most 30 wt%, and preferably at least 1 wt%, more preferably at least 2 wt%, even more preferably at least 5 wt% and most preferably at least 10 wt%, based on the total weight of the coating composition.

The coating composition may further comprise additives commonly used in coating compositions including pigments and dyes, surfactants, flow controlling agents, thixotropic agents, anti-gassing agents, wetting agents, ultraviolet light stabilizers, adhesion enhancing promoters, waxes, filling agents, drying stabilizers, siccatives, matting agents, defoamers, and curing catalysts including oxidation catalysts such as metal carboxylates. The additives can be any additive known in the art. Examples of pigments and dyes include metal oxides like titanium dioxide, iron oxide, zinc oxide and chromium oxide; metal hydroxides; metal sulfides, metal sulfates, metal carbonates such as calcium carbonate; carbon black, china clay, phthalo blues and greens, organo reds and other organic dyes. The coating compositions of the invention may increase the color intensity of the pigments and dyes. This may lead to a reduction in the total amount of pigment and/or dye used. The curing catalyst is preferably a strong acid. Examples of suitable curing catalysts include p-toluenesulfonic acid, xylenesulfonic acid, dodecyl benzene sulfonic acid, dinonyl naphthalene sulfonic acid, dinonyl naphthalene disulfonic acid, fluorosulfuric acid, trifuoromethane sulfonic acid, hexafluoro antimonate compounds and catalysts derived thereof, phosphoric acid and sulfuric acid. Examples of ultraviolet light stabilizers include benzophenone, such as hydroxydodecyl benzophenone, 2,4-dihydroxy-3',5'-di-t-butylbenzophenone, 2-hydroxy-4-acryloxyethoxybenzophenone and 2-hydroxy-4-methoxy-2'-carboxybenzophenone.

The coating composition of the invention may comprise the additives in an amount of at most 30 % by weight (wt%), based on the total weight of the coating composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The invention also pertains to a coated substrate coated substrate comprising a substrate and a cured coating composition applied to at least part of the substrate, the coating composition being in accordance with the invention.

The substrate of the invention can be any substrate known in the art. The substrate may be porous or non-porous. Examples of suitable substrates include metals, such as aluminum, aluminum alloys, steel, steel alloys, tin, tin alloys, zinc, zinc alloys, chrome and chrome alloys; glass such as fused silica glass, aluminosilicate glass, soda-lime-silica glass, borosilicate glass and lead-oxide glass; ceramics, such as porcelain, bone china, alumina, ceria, zirconia, carbides, borides, nitrides and silicides; plastic such as functionalized polyethylene (PE), functionalized polypropylene (PP), polyethylene terephthalate (PET), polyvinyl chloride (PVC) and nylons; and wood. Preferably, the substrate is metal, in particular aluminum.

In the context of the present application the term "cure" or "cured" refers to the process of hardening of the coating composition by polymerization and/or crosslinking. This curing process can be initiated by exposure to ultraviolet radiation, heat, such as by infrared radiation, by microwave radiation or by heating, e.g. in an oven, electron beams and chemical additives. The coating compositions of the invention preferably cure through exposure to ultraviolet radiation and heat, preferably through heat. Some coating compositions, e.g. decorative coating compositions, may cure at room temperature.

In a further embodiment of the invention, the coating composition of the invention can be used in application where corrosion protection and/or cured coating flexibility and formability are required. Examples of such applications include coil coating applications, can coatings (both external and internal can coatings), car refinish, and automotive applications.

### Polymer composition

The invention further pertains to a polymer composition comprising a polymer, oligomer and/or monomer and a fiber composition comprising plant-based fiber particles having a d95 of at most 60 mm, wherein at least 20 % of the particles have a particle size of at most 15 mm. The invention further pertains to a polymer composition comprising a polymer, oligomer and/or monomer and a dispersion comprising a solvent and a fiber composition comprising plant-based fiber particles having a d95 of at most 60 mm, wherein at least 20 % of the particles have a particle size of at most 15 mm.

The monomer, oligomer and/or polymer comprised in the inventive composition can be any monomer, oligomer or polymer known in the art. The oligomer generally includes dimers, trimers and tetramers of the monomer. The (co)polymers generally have a higher degree of polymerization (DP), preferably a DP of at least 20, more preferably at least 50. In this connection, for a definition of the degree of polymerization, reference is made to P.J. Flory, Principles of Polymer Chemistry, New York, 1953. The polymer or oligomer may be a homopolymer, a copolymer or a terpolymer. Examples of suitable polymers are polyolefins, such as polyethylene and polypropylene as well as grafted polyolefins; vinyl polymers, such as polystyrene, polymethyl methacrylate, polyvinyl chloride, polyvinylidene chloride or polyvinylidene fluoride, and blends of two or more polymers. Preferred polymers are polyolefins, vinyl polymers, polyesters, polycarbonates, polyamides, polyurethanes, polyepoxides, polyvinylalcohol, polyvinylbutyral, polyvinylacetaat, polyethers or polythioethers.

In a further embodiment of the invention, the polymer is a thermoplastic polymer. Examples of thermoplastic polymers include polyethylene, polypropylene, grafted polyolefins, and polystyrene; acetal (co)polymers, such as polyoxymethylene (POM); rubbers, such as natural rubber (NR), styrene-butadiene rubber (SBR), polyisoprene (IR), polybutadiene (BR), polyisobutylene (IIR), halogenated polyisobutylene, butadiene nitrile rubber (NBR), hydrogenated butadiene nitril (HNBR), styrene-isoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethane-vinylacetate rubber (EVA), polyacrylic rubbers (ACM), polynorbornene (PNR); polyurethanes (AU/EU) and polyester/ether thermoplastic elastomers.

In one embodiment, the polymer or copolymers is a polyurethane. Examples of such polyurethanes include rigid polyurethane foam, flexible polyurethane foam, polyurethane-based adhesive and polyurethane-based fibers such as polyurethane laminate (PUL) and Spandex. Preferred are polyurethane foams, in particular rigid polyurethane foams.

Particularly preferred are polymers or copolymers obtained by polymerization of at least one ethylenically unsaturated monomer. Such polymers include polyolefins and modified polyolefins, which are known to the man skilled-in-the-art. The polyolefin or modified polyolefin can be a homopolymer or a copolymer, terpolymer of grafted polymer. Examples of such (modified) polyolefins include polyethylene, polypropylene, polybutylene, polystyrene, polyvinyl chloride, polyvinylidene chloride and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, maleic anhydride-grafted polyolefin, maleic acid-grafted polyolefin, and mixtures thereof. More preferred polyolefins are polyethylene, polypropylene, polystyrene and polyvinyl chloride.

Suitable examples of polyethylene are high-density polyethylene (HDPE), low-density polyethylene (LDPE), straight chain low-density polyethylene (LLDPE), ultra-low density polyethylene and ultra-high molecular weight polyethylene. Further examples of ethylene-based copolymers include ethylene-vinyl acetate copolymer (EVA), ethylene-ethyl acetate copolymer (EEA), ethylene-methyl acrylate copolymer (EMA) and ethylene-acrylic acid copolymer (EAA). Preferred polyolefins are polyethylene and polypropylene, which include emulsions and dispersions thereof. Such emulsions and dispersions can be water-based or solvent-based. Examples of such polyolefin dispersions or emulsions include Mitsui Unisol R100 G, Mitsui XP04A, Mitsui S300, Mitsui Chemipearl W900 and Dow Canvera 1110.

In one embodiment of the invention, the polymer composition comprises the monomer, oligomer and/or polymer in an amount of at least 10 % by weight (wt%), based on the total weight of composition. Preferably, the monomer, oligomer and/or polymer is present in an amount of at least 20 wt%, more preferably at least 30 wt%, even more preferably at least 35 wt% and most preferably at least 40 wt%, and preferably at most 99 wt%, more preferably at most 95 wt%, even more preferably at most 90 wt%, even more preferably at most 85 wt%, even more preferably at most 80 wt%, and most preferably at most 75 wt%, based on the total weight of the polymer composition.

The plant-based fiber particles and fiber composition used in the polymer composition of the invention are the same as described above. In one embodiment of the invention, the polymer composition comprises the fiber composition in an amount of at most 90 % by weight (wt%), based on the total weight of composition. Preferably, the fiber composition is present in an amount of at most 80 wt%, more preferably at most 70 wt%, even more preferably at most 65 wt% and most preferably at most 60 wt%, and preferably at least 1 wt%, more preferably at least 5 wt%, even more preferably at least 10 wt%, even more preferably at least 15 wt%, even more preferably at least 20 wt%, and most preferably at least 25 wt%, based on the total weight of the polymer composition.

Alternative or additionally, the polymer composition may comprise a dispersion comprising a solvent and the fiber composition of the invention. The details of the inventive dispersion is described above. Preferably, the solvent in the dispersion is reactive with the monomer, oligomer and/or polymer.

The invention further pertains to a masterbatch comprising the fiber composition and/or dispersion in an amount of at most 50 % by weight (wt%), based on the total weight of composition. Preferably, the fiber composition and/or dispersion is present in an amount of at most 40 wt%, more preferably at most 30 wt%, even more preferably at most 25 wt% and most preferably at most 20 wt%, and preferably at least 0.001 wt%, more preferably at least 0.5 wt%, even more preferably at least 1 wt%, even more preferably at least 2 wt%, even more preferably at least 4 wt%, and most preferably at least 5 wt%, based on the total weight of the masterbatch. Correspondingly, the masterbatch comprises at least 60 wt% of the polymer, more preferably at least 80 wt%, even more preferably at least 85 wt% and most preferably at least 90 wt%, and preferably at most 99 wt%, more preferably at most 96 wt%, and most preferably at most 95 wt% of the polymer, based on the total weight of the masterbatch. Such masterbatches are highly concentrated premixes for polymer compounding, for example. Such masterbatches are generally blended with another polymer. The further polymer may be the same or different polymer as used in the masterbatch.

The polymer compositions of the invention including the masterbatch may further comprise additives commonly used in polymer-containing compositions including pigments and dyes, heat stabilizers, anti-oxidants, fillers, such as hydroxyapatite, silica, carbon black, glass fibers and other inorganic materials, flame retardants ,nucleating agents, impact modifiers, plasticizers, rheology modifiers, cross-linking agents, anti-gassing agents, surfactants, flow controlling agents, ultraviolet light (UV) stabilizers, adhesion enhancing promoters, waxes, matting agents, defoamers and curing catalysts. Examples of pigments and dyes include metal oxides like iron oxide, zinc oxide and; metal hydroxides; metal sulfides, metal sulfates, metal carbonates, such as calcium carbonate; carbon black, china clay, phthalo blues and greens, organo reds and other organic dyes.

The additives are optional and can be chosen according to need in amounts as desired. The composition of the invention may comprise the additives in an amount of at most 30 % by weight (wt%), based on the total weight of the composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the polymer composition.

The remaining part of the polymer composition may be comprised of other components commonly used in compositions. With the monomer, oligomer and/or polymer and the fiber composition and/or the dispersion, the other components add up to 100 wt% of the total weight of the polymer composition.

The compositions of the invention may also be processed and shaped using techniques known in the art. Examples of such processing techniques include melt spinning, die extrusion, injection molding, compression and transfer molding, thermoforming, rotational molding and sintering, blow molding, plastic foam molding, extrusion and extrusion-based techniques, such as pipe extrusion, sheet extrusion, tubular blown film extrusion, melt spinning, netting, and co-extrusion. In a further embodiment of the invention, the composition of the invention can be used in any application for which the composition of the invention is suitable. Examples of such applications include carpeting, automobile parts, window frames, kitchen worktops, container closures, lunch boxes, closures, medical devices, household articles, food containers, dishwashers, outdoor furniture, blow-molded bottles, disposable non-woven fabrics, cables and wires and packaging. The invention is exemplified in the following Examples.

### Examples

### Example 1: fiber particles from sugar beet

55 kg of a dried sugar beet pulp (on a band dryer) was comminuted using a mechanical impact mill with integrated ALPINE Turboplex Ultrafine Classifier ATP (Zirkoplex classifier mill ZPS ex Hosokawa) with a throughput of 25.4 kg/h, a mill speed of 5600 rpm and a classifier speed of 4000 rpm.

A fiber composition was obtained with sugar beet fibers having a d99 of 60.0 mm, a d95 of 46.4 mm, a d50 of 16.3 mm and a d10 of 1.7 mm as measured using a Malvern. About 46.8% of the fiber particles had a particle size of at most 15 mm. The fiber particles of the invention were light brown and uniformly colored. The fiber composition is free flowing and not dusty.

### Comparative Example A: fiber particles from sugar beet

2kg of Betabind^{®} A was passed three times through a ring mill (Mockmill professional 200) and subsequently sieved using a 53 mm-sieve on a shaker (Retsch AS control). This process is similar to the process described in Akdogan et al (2020: https://doi.org/10.1007/s10965-021-02445-w) except for Akdogan using a 63 mm-sieve.

A fiber composition was obtained with sugar beet fibers having a d99 of 88.4 mm, a d95 of 69.5 mm, a d50 of 33.1 mm and a d10 of 10.0 mm as measured using a Malvern. About 19.9% of the fiber particles had a particle size of at most 15 mm. The fiber particles of Comparative Example A were light brown and uniformly colored. The particle size distribution of fiber composition of Comparative Example A is larger and not in accordance with the present invention. It is further noted that the sieved fiber composition contains fiber particles considerably larger than the mesh size of the sieve.

### Example 2: fiber particles from sugar beet

29.8 kg of a dried sugar beet pulp (on a band dryer) was comminuted using a mechanical impact mill with integrated ALPINE Turboplex Ultrafine Classifier ATP (Zirkoplex classifier mill ZPS ex Hosokawa) with a throughput of 19.9 kg/h, a mill speed of 5600 rpm and a classifier speed of 5000 rpm.

A fiber composition was obtained with sugar beet fibers having a d99 of 48.7 mm, a d95 of 37.5 mm, a d50 of 12.8 mm and a d10 of 1.4 mm as measured using a Malvern. About 56.3% of the fiber particles had a particle size of at most 15 mm. The fiber particles of the invention were light brown and uniformly colored. The fiber composition is free flowing and not dusty.

### Example 3: fiber particles from sugar beet

8.9 kg of a dried sugar beet pulp (on a band dryer) was comminuted using a mechanical impact mill with integrated ALPINE Turboplex Ultrafine Classifier ATP (Zirkoplex classifier mill ZPS ex Hosokawa) with a throughput of 26.7 kg/h, a mill speed of 5600 rpm and a classifier speed of 3800 rpm.

A fiber composition was obtained with sugar beet fibers having a d99 of 71.7 mm, a d95 of 56.1 mm, a d50 of 20.7 mm and a d10 of 2.4 mm as measured using a Malvern. About 37.7% of the fiber particles had a particle size of at most 15 mm. The fiber particles of the invention were light brown and uniformly colored. The fiber composition is free flowing and not dusty.

### Example 4: fiber particles from sugar beet

8.9 kg of a dried sugar beet pulp (on a band dryer) was comminuted using a mechanical impact mill with integrated ALPINE Turboplex Ultrafine Classifier ATP (Zirkoplex classifier mill ZPS ex Hosokawa) with a throughput of 22.2 kg/h, a mill speed of 5600 rpm and a classifier speed of 5000 rpm.

A fiber composition was obtained with sugar beet fibers having a d99 of 59.7 mm, a d95 of 45.7 mm, a d50 of 15.9 mm and a d10 of 1.8 mm as measured using a Malvern. About 47.8% of the fiber particles had a particle size of at most 15 mm. The fiber particles of the invention were light brown and uniformly colored. The fiber composition is free flowing and not dusty.

## Claims

1. Fiber composition comprises plant-based fiber particles having a d95 of at most 60 mm, wherein at least 20 % of the particles have a particle size of at most 15 mm.

2. Fiber composition according to claim 1 comprising plant-based fiber particles having a d99 of at most 60 mm.

3. Fiber composition according to any one of claims 1 and 2 comprising plant-based fiber particles having a d50 of at most 20 mm.

4. Fiber composition according to any one of the preceding claims comprising plant-based fiber particles comprising cellulose and hemicellulose.

5. Fiber composition according to any one of the preceding claims comprising plant-based fiber particles comprising pectin.

6. Fiber composition according to any one of the preceding claims wherein the plant-based fiber particles are sugar beet pulp particles.

7. Dispersion comprising a solvent and a fiber composition according to any one of claims 1 to 6.

8. Dispersion according to claim 7 wherein the solvent is a polyol.

9. Coating composition comprising a resin and a fiber composition according to any one of claims 1 to 6.

10. Coating composition comprising a resin and a dispersion according to any one of claims 7 and 8.

11. Polymer composition comprising a polymer, oligomer and/or monomer and a fiber composition according to any one of claims 1 to 6.

12. Polymer composition comprising a polymer, oligomer and/or monomer and a dispersion according to any one of claims 7 and 8.
